# EUROPÄISCHE PATENTSCHRIFT

(11) **EP 2 362 119 B1**
(45) Veröffentlichungstag und Bekanntmachung des Hinweises auf die Patenterteilung: **02.09.2015**
(21) Anmeldenummer: 10001684.9
(22) Anmeldetag: 19.02.2010
(51) Int. Cl.: F16J 15/00, F16J 15/32, F16J 15/16

(54) **Radialwellendichtung zur Trennung zweier Medien**
Radial shaft seal for separating two media
Joint radial d'arbre destiné à la séparation de deux milieux

(43) Veröffentlichungstag der Anmeldung: 31.08.2011
(73) Patentinhaber: Carl Freudenberg KG, 69469 Weinheim (DE)
(72) Erfinder: Kohl, Christian, 69493 Hirschberg (DE); Hintenlang, Guenter, 69518 Absteinach (DE)

(56) Entgegenhaltungen:
- EP-A1- 1 557 596
- EP-A2- 1 388 694
- DE-A1- 2 351 767
- US-B1- 6 561 519

## Beschreibung

### Technisches Gebiet

Die vorliegende Erfindung betrifft eine Radialwellendichtung zur Trennung zweier Medien aus zwei formschlüssig miteinander verbundenen in eine Öffnung einsetzbaren Radialwellendichtringen, deren Bodenflächen auf ihrem Umfang in gleichmäßigen Abständen radial augerichtete Aussparungen haben und die mit ihren axialen Flächen zueinander und ihren Dichtlippen axial entgegengesetzt ausgerichtet sind und der Raum zwischen den Dichtlippen mit einer Belüftung versehen ist, wobei die Radialwellendichtringe Versteifungselemente, mit aus **einem Elastomer** bestehenden Überzügen zur statischen Abdichtung in der Öffnung und mit Dichtlippen zur dynamischen Abdichtung an einer Welle versehen sind und die Dichtlippen durch Wendelfedern an die Welle angedrückt werden

### Stand der Technik

Durch die US 3 516 679 ist eine Dichtungsanordnung bekannt geworden, welche aus mindestens zwei Radialwellendichtringen besteht, die in gleicher Richtung weisende Dichtlippen hat. Eine solche Dichtungsanordnung ermöglicht eine Dichtwirkung jedoch nur in einer axialen Richtung.

Eine andere Möglichkeit der Anordnung von zwei Radialwellendichtringen zeigt die US 2,818,283, bei der die Dichtlippen axial entgegengesetzt gerichtet sind.

Der zwischen den beiden Dichtlippen gebildete Raum ist mit einem Zuführungskanal versehen und dient zur Aufnahme einer Flüssigkeit. Da hier die Dichtlippen vom eigentlich abzudichtenden Raum weggerichtet sind, ist ein solche Anordnung für die Abdichtung zweier unter hohem Druck stehenden Medien nicht brauchbar, da unter höherem Druck die Dichtlippen sich selbsttätig von der Wellenoberfläche abheben würden.

Bekannt ist auch durch die GB 1,117,672 eine Dichtungskombination, bei der zwei axial neben einander angeordnete Radialwellendichtringe mit entgegengesetzt gerichteten Dichtlippen verwendet werden. Zwischen den beiden Dichtringen besteht ein Spalt, über den eine Leckage und eine Schmierung des zwischen den Dichtlippen gebildeten Raumes möglich ist. Die Hintereinanderschaltung zweier gleich ausgebildeter Wellendichtringe benötigt jedoch eine erhebliche axiale Baulänge, die in vielen Fällen nicht zur Verfügung steht. Außerdem ist die Montage der Dichtringe nacheinander getrennt durchzuführen.

Bekannt ist auch eine Dichtungsanordnung siehe DE 196 22 850 A1, bei der zwei Dichtungsringe derselben Form und Größe miteinander einteilig verbunden sind, wobei Positionierungsmittel zwischen die Dichtungsringe eingefügt sind, welche die Dichtungsringe in festen Positionen im Verhältnis zueinander halten und die Verbindungsmittel zum miteinander Verbinden der Dichtungsringe hat. Hier handelt es sich um eine sehr aufwändige Konstruktion, deren Einsatz nur in Sonderfällen, schon der hohen Kosten wegen, sinnvoll erscheint.

Eine sehr einfache Lösung für eine Radialwellendichtung zum Abdichten zweier Medien, bei der die Radialwellendichtringe identisch ausgebildet und ineinander steckbar sind, zeigt die EP 1 557 596 B1. Hier sind die Radialwellendichtringe auf ihren zueinander gerichteten Flächen mit axial ausgerichteten Ringsegmenten versehen, die bei montierten Ringwellendichtringen kraft- und/oder formschlüssig ineinander greifen. Die radialen Außenflächen der inneren Ringsegmente bilden mit den radialen Innenflächen der äußeren Ringsegmente eine Schnappverbindung. Zwischen den Dichtringen bestehen freie Abstände, die einen Entlüftungsspalt bilden. Dabei wird die Schnappverbindung durch eine konische Ausgestaltung der außen bzw. der Innenflächen gebildet. Obwohl in der Druckschrift nicht explizit behandelt, kann die Ausbildung der Dichtlippen, insbesondere die Lage ihrer Wirkebenen, Auswirkungen auf die Dichtheit der Dichtringe haben. Als Wirkebenen werden die durch die Mitte der Ringfedernut und der Dichtkante der Dichtlippe gelegten Ebenen verstanden. Der axiale Abstand zwischen den Wirkebenen ist positiv, wenn die Federnut hinter der Dichtkante liegt und negativ , wenn sie vor der Dichtkante in Bezug auf den abzudichtenden Raum liegt. Siehe z. B. die DE 2 333 208 A1, Seite 7.

### Darstellung der Erfindung

Der Erfindung liegt die Aufgabe zugrunde eine Radialwellendichtung zur Trennung zweier Medien zu schaffen, die vielseitig einsetzbar ist, einen geringen Raumbedarf hat und eine hohe Gestaltungsfreiheit aufweist. Die Dichtringe sollen verliersicher miteinander verbunden sein, hohe Drehzahlen zulassen und auch für wechselnde Drehrichtungen einsetzbar sein.

Die Lösung der gestellten Aufgabe wird mit den Merkmalen des Anspruchs 1 erreicht. Einer der Dichtringe ist an seinem radial innen liegenden Rand mit Klemmnocken versehen, die über den radial innenliegende überstehenden Rand des anderen Dichtrings greifen, sodass beide Dichtringe in eine formschlüssig hintergreifende Lage zueinander zusammenfügbar sind und die Dichtlippen sind mit Rückförderrillen versehen. Um das Einschnappen der Klemmnocken über den radial innenliegenden Rand des anderen Dichtrings zu ermöglichen, bestehen die Klemmnocken aus einem elastomeren Material. Ergänzend hierzu kann auch der Rand des anderen Dichtrings aus einem elastomeren Material hergestellt sein. Der nach innen gerichtete radial überstehende Rand des einen Dichtrings ist ein Teil der Bodenfläche des Dichtrings. Der Rand bildet außerdem mit dem anschließenden Teil der Dichtlippe eine Ringnut, in welche die Klemmnocken des anderen Dichtrings einschnappen. Die Klemmnocken ihrerseits bilden mit der Bodenfläche des zugehörigen Dichtrings eine Ringnut, in welche der überstehende Rand des ersten Dichtrings einpassend eingreift.

Die Klemmnocken, der überstehende Rand und die Dichtlippen werden bevorzugt aus dem gleichen elastomeren Material hergestellt und sind integral miteinander verbunden.

Die Dichtringe ihrerseits sind mit Versteifungselementen versehen, die L-förmig ausgebildet sind. Der radial äußere Schenkel des L hat einen Überzug aus einem elastomeren Material, der zur statischen Abdichtung der Radialwellendichtung in einer Öffnung dient. An den radialen Flanken der Versteifungselemente der Dichtringe sind die Dichtlippen angebracht, die bevorzugt mit einer Wendelfeder ausgerüstet sind. Die Dichtlippen sind an die in den abzudichtenden Räumen herrschenden Drücke angepasst. So kann beispielsweise eine Dichtlippe größer als die andere ausgebildet sein. Beide Dichtlippen werden jedoch mit gegenläufigen Rückförderrillen oder mit Wechseldrall versehen um einzubringende Leckageflüssigkeit aus dem Innenraum zwischen den beiden Dichtlippen zurückfördem zu können. Die an den zueinander ausgerichteten Flächen der radialen Flanken der Versteifungselemente vorhandenen Bodenflächen der Dichtringe bestehen ebenfalls aus einem elastomeren Material. Beide Bodenflächen werden zur Bildung der Klemmnocken und des überstehenden Rands herangezogen. Mit anderen Worten, die Bodenfläche des einen Dichtrings ist mit dem nach innen vorstehenden Rand versehen, während die andere Bodenfläche des anderen Dichtrings auf ihrer innenliegenden Randseite die Klemmnocken hat. Außerdem haben die Bodenflächen auf ihrem Umfang in gleichmäßigen Abständen radial angeordnete Aussparungen. Diese Aussparungen können in ihren Querschnitten identisch sein. Möglich ist eine Ausbildung, bei der in den Dichtringen die gleiche Anzahl an Aussparungen vorhanden ist. Ausführungsformen bei denen in dem einen Dichtring die doppelte Anzahl an Aussparungen als im anderen Dichtring vorhanden ist sind möglich. Auch andere Anordnungen sind durchführbar, wobei mindestens einmal zwei Aussparungen zur Deckung gelangen müssen, sodass ein Durchlass nach außen möglich ist und damit eine Belüftung des Innenraums zwischen den beiden Dichtlippen.

### Kurzbeschreibung der Zeichnung

Anhand eines Ausführungsbeispiels wird die Erfindung nachstehend näher erläutert.

Es zeigt:
Fig. 1 einen Schnitt durch die Radialwellendichtung in ihrer prinzipiellen Ausführungsform.
Fig. 2 und Fig 3 perspektivische Ansichten der Dichtringe auf ihre Innenseiten

### Ausführung der Erfindung

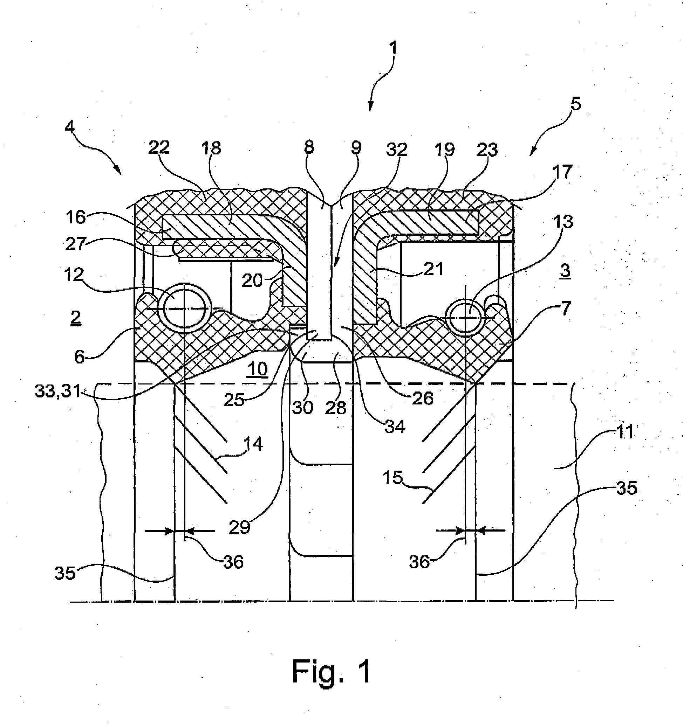

Die in der Fig. 1 gezeigte Ausführung der Radialwellendichtung 1 zur Trennung zweier Medien in den nicht näher dargestellten Räumen 2 und 3 besteht im Wesentlichen aus den Radialwellendichtringen 4 und 5, die formschlüssig miteinander verbunden sind. Die Dichtlippen 6 und 7 sind axial entgegengesetzt ausgerichtet. Ihre Bodenflächen 8 und 9 liegen im montierten Zustand aneinander an. Der zwischen den Dichtlippen 6 und 7 gebildete Raum 10 ist mit einer Belüftung 32 nach außen versehen. Die von der Dichtung umfassende Welle 11 ist gestrichelt angedeutet, Die auf der Zeichnung zu sehende Dichtlippe 6 ist größer ausgebildet als die Dichtlippe 7. Auch die verwendeten Wendelfedern 12 und 13 sind in dieser Ausführung von unterschiedlicher Größe und entsprechend angepasst. Möglich sind auch Ausführungen, bei denen beide Lippen gleich groß sind. Die Dichtlippen 6 und 7 sind jeweils mit den Rückfördemuten 14 und 15 versehen, welche bei entsprechender Drehrichtung der Welle eine Rückförderung von Leckageflüssigkeit bewirken. Dabei ist die Richtung der Rückförderrillen 14 und 15 so ausgerichtet, dass die Rückförderung dann erfolgt, wenn die Welle 11 in der Hauptdrehrichtung dreht. Gleichzeitig aber lässt die Dichtung insgesamt auch eine Drehrichtung in der anderen Richtung zu. Dieses insbesondere dann, wenn die Dichtlippen mit Wechseldrall ausgestattet sind. Die Dichtringe 4 und 5 sind mit den Versteifungselementen 16 und 17 ausgerüstet. Diese Versteifungselement 16 und 17 sind L-förmig ausgebildet und haben den axial ausgerichteten oberen Teil 18 und 19 sowie die radial ausgerichteten Teile 20 und 21. An den axialen Teil 18 und 19 sind die elastomeren Auflagen 22 und 23 vorhanden, welche als statische Dichtungen beim Einsatz der Radialwellendichtung 1 in eine entsprechende Öffnung dienen. Die radialen Teile 20 und 21 der Versteifungselemente 16 und 17 dienen als Stützen für die Dichtlippen 6 und 7. Dabei sind sie im vorliegenden Ausführungsbeispiel unterschiedlich lang ausgebildet. Der Schenkel 21 bei der kleineren Dichtlippe 7 ist länger als der Schenkel 20 bei der größeren Dichtlippe 6.

An die zueinander ausgerichteten Schenkel 20 und 21 der Versteifungselemente 16 und 17 schließen die Bodenflächen 8 und 9 an, die aus einem elastomeren Material hergestellt sind. Dieses Material ist gleich mit dem für die statische Dichtung 22 und 23 sowie für die Dichtlippen 6 und 7 verwendeten Material sodass insgesamt die statische Dichtung 22, 23 die Dichtlippen 6 und 7 sowie die Bodenflächen 8 und 9 aus dem gleichen elastomeren Material bestehen. Die Dichtringe 4,5 können dann in einem Vulkanisationsprozess hergestellt werden.

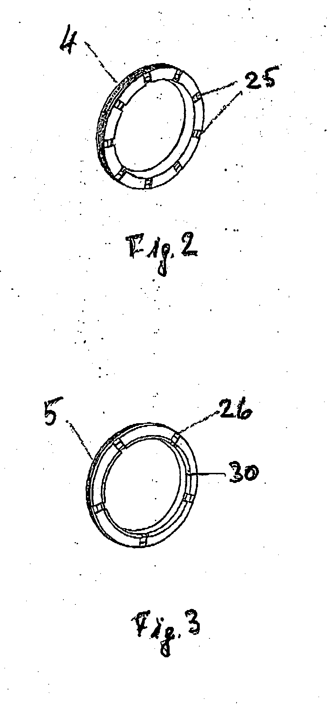

Wie aus den Figuren 2 und 3 ersichtlich, haben die Dichtringe 4 und 5 auf den Bodenflächen 8 und 9 auf deren Umfang in gleichmäßigen Abständen radial ausgerichtete Aussparungen 25 und 26, die Anzahl der Aussparungen 25 und 26 kann gleich oder unterschiedlich gewählt werden, je nach dem wieviele Entlüftungen angebracht werden sollen. Im vorliegenden Fall hat der Dichtring 4 neun Aussparungen 25, während der Dichtring 5, fünf Aussparungen 26 hat. Dabei ist es günstig, wenn die Aussparungen 25, 26 in ihren Querschnitte identisch sind. Die Montage der Dichtringe 4 und 5 miteinander, hat der Dichtring 4 auf seiner Innenseite am Schenkel 18 des Versteifungselements 16 nach innen vorstehende Noppen 27 zur Montagecodierung. Im Schnitt der Figur 1 liegen zwei Aussparungen 25, 26, fluchtend zueinander, sodass hier die Entlüftungsöffnung 32 vorliegt. Im vorliegenden Beispiel ist nur eine Entlüftungsöffnung 32 möglich, da diese sich aus den ungeraden Zahlen der Aussparungen 25 und 26 der Dichtringe 4 und 5 ergibt.

Der radial innenliegende Rand 28 des Dichtrings 5 ist zwischen den Aussparungen 26 mit den Klemmnocken 30 versehen. Diese Klemmnocken 30 haben einen radial nach außen abgewinkelten Fuß 31, der hinter den Rand 29 am Boden 8 des Dichtrings 4 greift. Auf diese Weise werden die beiden Dichtringe 4 und 5 unverlierbar miteinander verbunden.

Gleichzeitig wird durch eine entsprechende Einstellung der Dichtringe 4 und 5 zueinander durch die Aussparungen 25 und 26 in den Bodenflächen 8 und 9 zumindest eine Entlüftungsöffnung 32 hergestellt, welche den Raum 10 zwischen den Dichtlippen 6 und 7 mit einer entsprechenden Öffnung im Gehäuse verbindet.

Im gezeigten Ausführungsbeispiel sind zwei unterschiedliche Dichtlippen 6 und 7 gewählt worden, die auf die unterschiedlichen Drücke in den abzudichtenden Räumen 2 und 3 ausgerichtet sind. Dieses hat zur Folge, dass auch unterschiedlich große Versteifungselemente 16 und 17 eingesetzt wurden. So ist insbesondere der radiale Schenkel 21 bei der kleineren Dichtlippe 7 länger als der Schenkel 20 bei der größeren Dichtlippe 6. Bei einer Ausführungsform mit zwei gleichen Dichtlippen ist es jedoch auch möglich, die beiden Dichtringe 4 und 5 identisch auszubilden, indem beide Dichtringe 4 und 5 abschnittsweise mit Klemmnocken 30 und gegenüberliegend mit den zugehörigen Rändern 29 ausgestattet werden. Die Versteifungselemente sind dann gleich groß. Darüber hinaus ist es von Vorteil, wenn die Wirkebenen der Dichtlippen im nichteingebauten Zustand der Dichtung positiv sind.

## Patentansprüche

1. Radialwellendichtung (1) zur Trennung zweier Medien aus zwei formschlüssig miteinander verbundenen in eine Öffnung einsetzbaren Radialwellendichtringen (4,5),deren Bodenflächen (8, 9) auf ihrem Umfang in gleichmäßigen Abständen radial ausgerichtete Aussparungen (25, 26) haben und die mit ihren axialen Flächen (8,9) zueinander und ihren Dichtlippen (6,7) axial entgegengesetzt ausgerichtet sind, wobei Raum (10) zwischen den Dichtlippen (6,7) mit einer Belüftung (32) versehen ist, wobei die Radialwellendichtringe (4,5) Versteifungselemente (16,17), mit aus einem Elastomer bestehenden Überzügen (22,23) zur statischen Abdichtung in der Öffnung und mit Dichtlippen (6,7) zur dynamischen Abdichtung an einer Welle (11) versehen sind und die Dichtlippen (6,7) durch Wendelfedern (12,13) an die Welle (11) angedrückt werden, **dadurch gekennzeichnet, dass** einer der Dichtringe (4,5) an seinem radial innen liegenden Rand (28) Klemmnocken (30) hat, die über den radial innen liegenden überstehenden Rand (29) des anderen Dichtrings (4,5) greifen, so dass beide Dichtringe (4,5) in eine formschlüssig hintergreifende Lage zueinander zusammenfügbar sind und dass die Dichtlippen (6,7) mit Rückförderrillen (14, 15) versehen sind.

2. Radialwellendichtung nach Anspruch 1, **dadurch gekennzeichnet, dass** die Wirkebenen (35, 36) der Dichtlippen (6, 7) im nichteingebauten Zustand positiv sind.

3. Radialwellendichtung nach einem der Ansprüche 1 oder 2, **dadurch gekennzeichnet, dass** der nach innen gerichtete überstehende Rand (29) des einen Dichtrings (4) ein Teil der Bodenfläche (8) des Dichtrings (4) ist.

4. Radialwellendichtung nach einem der Ansprüche 1 bis 3, **dadurch gekennzeichnet, dass** der überstehende Rand (29) des Dichtrings (4) mit dem axial anschließenden Teil der Dichtlippe (6) eine Ringnut (33) bildet, in welche die Klemmnocken (30) des anderen Dichtrings (5) einschnappen.

5. Radialwellendichtung nach einem der Ansprüche 1 bis 4, **dadurch gekennzeichnet, dass** die Klemmnocken (30) des Dichtrings (5) mit der Bodenfläche (9) eine Ringnut (34) bilden, in die der überstehende Rand (29) des ersten Dichtrings (4) eingreift.

6. Radialwellendichtung nach einem der Ansprüche 1 bis 5, **dadurch gekennzeichnet, dass** die Klemmnocken (30) und der überstehende Rand (29) sowie die Dichtlippen (6, 7) aus dem gleichen elastomeren Material sind.

7. Radialwellendichtung nach einem der Ansprüche 1 bis 6, **dadurch gekennzeichnet, dass** die Klemmnocken (30) und die Dichtlippen (6,7) integral miteinander verbunden sind.

8. Radialwellendichtung nach einem der Ansprüche 1 bis 7, **dadurch gekennzeichnet, dass** die Bodenflächen (8,9) der Dichtringe (4,5) aus einem elastomeren Material bestehen.

9. Radialwellendichtung nach einem der Ansprüche 1 bis 8, **dadurch gekennzeichnet, dass** die Aussparungen (25, 26) in ihrem Querschnitt identisch sind.

10. Radialwellendichtung nach Anspruch 9 , **dadurch gekennzeichnet, dass** in einem Dichtring (4,5) die doppelte Anzahl an Aussparungen (25, 26) als in anderen Dichtring (4,5) vorhanden ist.

11. Radialwellendichtung nach einem der Ansprüche 9 oder 10, **dadurch gekennzeichnet, dass** bei montierter Dichtung (1) die Aussparungen (25, 26), bei unterschiedlicher Anzahl auf den Dichtringen (4,5) zumindest teilweise fluchtend zueinander liegen.

12. Radialwellendichtung nach einem der Ansprüche 1 bis 11, **dadurch gekennzeichnet, dass** die Versteifungselemente (16, 17) L-förmig ausgebildet sind.

## Claims

1. Radial shaft seal (1) for separating two media composed of two positively interconnected radial shaft sealing rings (4, 5) which can be inserted into an opening and whose base surfaces (8, 9) have on their periphery cutouts (25, 26) oriented radially at uniform spacings and which are oriented with their axial surfaces (8, 9) towards one another and their sealing lips (6, 7) axially opposed to one another, wherein the space (10) between the sealing lips (6, 7) is provided with a vent (32), wherein the radial shaft sealing rings (4, 5) are provided with reinforcing elements (16, 17) with covers (22, 23) consisting of an elastomer for static sealing in the opening and with sealing lips (6, 7) for dynamic sealing on a shaft (11) and the sealing lips (6, 7) are pressed against the shaft (11) by helical springs (12, 13), **characterized in that** one of the sealing rings (4, 5) has clamping lugs (30) on its radially inner edge (28), which clamping lugs engage over the radially inner projecting edge (29) of the other sealing ring (4, 5) such that both sealing rings (4, 5) can be joined together in a position with respect to one another with positive engagement from behind, and **in that** the sealing lips (6, 7) are provided with return grooves (14, 15).

2. Radial shaft seal according to Claim 1, **characterized in that** the active planes (35, 36) of the sealing lips (6, 7) are positive in the non-installed state.

3. Radial shaft seal according to either of Claims 1 and 2, **characterized in that** the inwardly directed projecting edge (29) of one sealing ring (4) is part of the base surface (8) of the sealing ring (4).

4. Radial shaft seal according to one of Claims 1 to 3, **characterized in that** the projecting edge (29) of the sealing ring (4) forms an annular groove (33) with the axially adjoining part of the sealing lip (6), into which annular groove the clamping lugs (30) of the other sealing ring (5) snap.

5. Radial shaft seal according to one of Claims 1 to 4, **characterized in that** the clamping lugs (30) of the sealing ring (5) form an annular groove (34) with the base surface (9), into which annular groove the projecting edge (29) of the first sealing ring (4) engages.

6. Radial shaft seal according to one of Claims 1 to 5, **characterized in that** the clamping lugs (30) and the projecting edge (29) and also the sealing lips (6, I' 7) are made from the same elastomeric material.

7. Radial shaft seal according to one of Claims 1 to 6, **characterized in that** the clamping lugs (30) and the sealing lips (6, 7) are integrally connected to one another.

8. Radial shaft seal according to one of Claims 1 to 7, **characterized in that** the base surfaces (8, 9) of the sealing rings (4, 5) consist of an elastomeric material.

9. Radial shaft seal according to one of Claims 1 to 8, **characterized in that** the cutouts (25, 26) are identical in their cross section.

10. Radial shaft seal according to Claim 9, **characterized in that** twice the number of cutouts (25, 26) are present in one sealing ring (4, 5) than in the other sealing ring (4, 5).

11. Radial shaft seal according to either of Claims 9 and 10, **characterized in that**, when the seal (1) is mounted, the cutouts (25, 26), with a different number on the sealing rings (4, 5), are at least partially aligned with one another.

12. Radial shaft seal according to one of Claims 1 to 11, **characterized in that** the reinforcing elements (16, 17) are L-shaped.

## Revendications

1. Joint radial d'arbre (1) destiné à la séparation de deux milieux, constitué de deux bagues d'étanchéité radiales d'arbre (4, 5) connectées l'une à l'autre par engagement par correspondance de formes et pouvant être insérées dans une ouverture, dont les surfaces de fond (8, 9) présentent des évidements (25, 26) orientés radialement sur leur périphérie de manière équidistante et qui sont orientées avec leurs surfaces axiales (8, 9) l'une vers l'autre et de manière opposée axialement à leurs lèvres d'étanchéité (6, 7), l'espace (10) entre les lèvres d'étanchéité (6, 7) étant pourvu d'une ventilation (32), les bagues d'étanchéité radiales d'arbre (4, 5) étant pourvues d'éléments de rigidification (16, 17) avec des revêtements (22, 23) constitués d'un élastomère pour l'étanchéité statique dans l'ouverture et avec des lèvres d'étanchéité (6, 7) pour l'étanchéité dynamique au niveau d'un arbre (11) et les lèvres d'étanchéité (6, 7) étant pressées par des ressorts hélicoïdaux (12, 13) contre l'arbre (11), **caractérisé en ce que** l'une des bagues d'étanchéité (4, 5) présente au niveau de son bord situé radialement à l'intérieur (28) des cames de serrage (30) qui s'engagent par-dessus le bord saillant situé radialement à l'intérieur (29) de l'autre bague d'étanchéité (4, 5), de sorte que les deux bagues d'étanchéité (4, 5) puissent être assemblées l'une à l'autre dans une position venant en prise par l'arrière par engagement par correspondance de formes et que les lèvres d'étanchéité (6, 7) soient pourvues de gorges de refoulement (14, 15).

2. Joint radial d'arbre selon la revendication 1, **caractérisé en ce que** les plans d'action (35, 36) des lèvres d'étanchéité (6, 7) sont positifs dans l'état non installé.

3. Joint radial d'arbre selon l'une quelconque des revendications 1 ou 2, **caractérisé en ce que** le bord saillant orienté vers l'intérieur (29) de l'une des bagues d'étanchéité (4) constitue une partie de la surface de fond (8) de la bague d'étanchéité (4).

4. Joint radial d'arbre selon l'une quelconque des revendications 1 à 3, **caractérisé en ce que** le bord saillant (29) de la bague d'étanchéité (4) forme avec la partie de la lèvre d'étanchéité (6) se raccordant axialement une rainure annulaire (33) dans laquelle s'encliquètent les cames de serrage (30) de l'autre bague d'étanchéité (5).

5. Joint radial d'arbre selon l'une quelconque des revendications 1 à 4, **caractérisé en ce que** les cames de serrage (30) de la bague d'étanchéité (5) forment avec la surface de fond (9) une rainure annulaire (34) dans laquelle s'engage le bord saillant (29) de la première bague d'étanchéité (4).

6. Joint radial d'arbre selon l'une quelconque des revendications 1 à 5, **caractérisé en ce que** les cames de serrage (30) et le bord saillant (29) ainsi que les lèvres d'étanchéité (6, 7) sont fabriqués en le même matériau élastomère.

7. Joint radial d'arbre selon l'une quelconque des revendications 1 à 6, **caractérisé en ce que** les cames de serrage (30) et les lèvres d'étanchéité (6, 7) sont connectées intégralement les unes aux autres.

8. Joint radial d'arbre selon l'une quelconque des revendications 1 à 7, **caractérisé en ce que** les surfaces de fond (8, 9) des bagues d'étanchéité (4, 5) se composent d'un matériau élastomère.

9. Joint radial d'arbre selon l'une quelconque des revendications 1 à 8, **caractérisé en ce que** les évidements (25, 26) sont identiques en section transversale.

10. Joint radial d'arbre selon la revendication 9, **caractérisé en ce que** dans une bague d'étanchéité (4, 5) sont prévus deux fois plus d'évidements (25, 26) que dans l'autre bague d'étanchéité (4, 5).

11. Joint radial d'arbre selon l'une quelconque des revendications 9 ou 10, **caractérisé en ce que** lorsque le joint d'étanchéité (1) est monté, les évidements (25, 26), dans le cas d'un nombre différent sur les bagues d'étanchéité (4, 5), sont situés au moins en partie en affleurement les uns avec les autres.

12. Joint radial d'arbre selon l'une quelconque des revendications 1 à 11, **caractérisé en ce que** les éléments de rigidification (16, 17) sont réalisés en forme de L.
